# EUROPEAN PATENT APPLICATION

(11) **EP 4 541 650 A1**
(43) Date of publication of application: **23.04.2025**
(21) Application number: 23864454.6
(22) Date of filing: 30.06.2023
(51) Int. Cl.: B60N 2/02

(54) **AUTOMOBILE SEAT AND AUTOMOBILE COMPRISING SAME**

(30) Priority: 14.09.2022 CN 202211117030
(71) Applicant: Nio Technology (Anhui) Co., Ltd, Hefei City, Anhui 230601 (CN)
(72) Inventor: CHENG, Rongkai, Shanghai 201804 (CN); XU, Zhiqiang, Shanghai 201804 (CN); WANG, Qiong, Shanghai 201804 (CN); FAN, Zhenxiong, Shanghai 201804 (CN)
(74) Representative: Vossius & Partner Patentanwälte Rechtsanwälte mbB
(86) International application number: PCT/CN2023/105208
(87) International publication number: WO 2024/055717

(57) **Abstract**

The invention relates to a vehicle seat and a vehicle having the vehicle seat. The vehicle seat includes: a mounting bracket; a cushion slidably fixed to the mounting bracket; a connecting bracket fixedly connected to the cushion; a backrest, a lower portion of the backrest being rotatably fixed to the connecting bracket; and a support bracket having a movable end rotatably fixed to the backrest and a fixed end adapted to be fixed to a vehicle body of a vehicle, the connecting bracket causing the backrest to slide together when the cushion slides relative to the mounting bracket, and at the same time, the backrest being rotated relative to the connecting bracket under the action of the support bracket. The vehicle of the invention can easily realize the linkage adjustment of the cushion and the backrest, improve the comfort of the vehicle seat, and simplify the structure of the vehicle seat, facilitate machining and manufacturing, reducing machining costs and reducing product weight.

## Description

### REFERENCE TO PRIORITY APPLICATION

The invention claims priority to the Chinese Patent Application No. 202211117030.1 filed on September 14, 2022, the content of which is incorporated herein by reference in its entirety.

### Technical Field

The invention relates to the technical field of vehicles, and in particular to a vehicle seat and a vehicle having the vehicle seat.

### Background Art

The vehicle seat is a seat for a driver or a passenger in a vehicle, can provide a comfortable and safe seat for the driver or the passenger, and is one of important parts of the vehicle.

Currently, a vehicle seat generally includes components such as a cushion, a backrest, a headrest and an armrest. In order to improve the comfort of the vehicle seat, particularly front seats of a vehicle (i.e. the seat for a driver and the seat for a front passenger), the position of the cushion and the angle of the backrest are adjustable. A vehicle seat with a cushion and backrest linkage adjustment function has been developed in the prior art to further improve the comfort of the vehicle seat. For example, the Chinese Patent Application No. CN103661011B discloses a seat with a backrest and cushion linkage. The seat comprises a fixed seat frame, a slidable seat frame, a push-pull component, a backrest, a pitch rotating shaft, a linkage plate, a positioning device and other components. A lower end of the backrest is pivotally connected to a rear end of the push-pull component by an articulated shaft; A pitch rotating shaft is provided on the backrest such that the backrest is rotatable relative to the pitch rotating shaft and is restrained by the slidable seat frame. When the backrest is rotated about the articulated shaft, the push component is caused to slide forwards or backwards relative to the slidable seat frame. The linkage plate is pivotally connected to the push-pull component by a push-pull linkage shaft, pivotally connected to the slidable seat frame by a slide linkage shaft, and pivotally connected to the fixed seat frame by a fixed linkage shaft. The push-pull component and the slidable seat frame are respectively driven by the push-pull linkage shaft and the slide linkage shaft to synchronously move back and forth with the fixed linkage shaft as a fulcrum. However, the seat with a backrest and cushion linkage has many components, is complex in structure and is costly to machine, and there is a potential for improvements.

Therefore, a new technical solution is needed in the art to solve the above problem.

### Summary

In order to solve the technical problem of a complicated structure of a vehicle seat with a cushion and backrest linkage adjustment function in the prior art, the invention provides a vehicle seat. The vehicle seat includes: a mounting bracket; a cushion slidably fixed to the mounting bracket; a connecting bracket fixedly connected to the cushion; a backrest, a lower portion of the backrest being rotatably fixed to the connecting bracket; and a support bracket having a movable end rotatably fixed to the backrest and a fixed end adapted to be fixed to a vehicle body of a vehicle, the connecting bracket causing the backrest to slide together when the cushion slides relative to the mounting bracket, and at the same time, the backrest being rotated relative to the connecting bracket under the action of the support bracket.

The vehicle seat of the invention includes a mounting bracket, a cushion, a connecting bracket, a backrest, and a support bracket. The cushion is slidably fixed to the mounting bracket for adjusting the position of the cushion. The connecting bracket is fixedly connected to the cushion. A lower portion of the backrest is rotatably fixed to the connecting bracket, such that the connecting bracket can easily cause the backrest to slide together when the cushion slides relative to the mounting bracket. In addition, the support bracket is configured with a movable end rotatably fixed to the backrest and a fixed end adapted to be fixed to a vehicle body of a vehicle, such that when the backrest is caused to slide together by the connecting bracket, the support bracket will rotate about its fixed end, and the movable end of the support bracket moves with the backrest and rotates relative to the backrest, thus causing the backrest to rotate relative to the connecting bracket under the action of the support bracket. With the above configuration, the vehicle seat of the invention can easily realize the linkage adjustment of the cushion and the backrest made, and has a simple structure, and is easy to machine and manufacture, which significantly reduces machining costs and reduces product weight.

In a preferred technical solution of the vehicle seat as described above, a first sliding slot that is adjacent to the backrest and a second sliding slot that is remote from the backrest are provided in the mounting bracket; and a first sliding rod slidable in the first sliding slot and a second sliding rod slidable in the second sliding slot are provided on the cushion, and the connecting bracket is fixed to the first sliding rod. The fit between the sliding rods (i.e. the first sliding rod and the second sliding rod) and the sliding slots (i.e. the first sliding slot and the second sliding slot) allows the cushion to be easily slidably connected to the mounting bracket. Further, The fit between the two sets of sliding rods and sliding slots enables the cushion to slide smoothly relative to the mounting bracket. The connecting bracket is fixed to the first sliding rod adjacent to the backrest to fit with the backrest.

In a preferred technical solution of the vehicle seat as described above, the mounting bracket includes: a first side plate and a second side plate, the first side plate and the second side plate being arranged opposite each other, and the first sliding slot and the second sliding slot being provided in each of the first and second side plates; and a fixed rod arranged between the first side plate and second side plate and positioned away from the backrest. With the above configuration, the mounting bracket has a simple and organized structure and is easily machined.

In a preferred technical solution of the vehicle seat as described above, the connecting bracket includes a first connecting plate and a second connecting plate opposite each other and fixed at two ends of the first sliding rod, respectively, the first connecting plate and the second connecting plate each being connected to the backrest. With the above configuration, the connecting bracket has a simple structure and is easily machined.

In a preferred technical solution of the vehicle seat as described above, the connecting bracket further includes a connecting rod, the connecting rod having a first connecting end fixed to the first connecting plate and a second connecting end fixed to the second connecting plate. The provision of the connecting rod may enhance the strength of the connection between the first connecting plate and the second connecting plate, thereby improving the stability of the structure.

In a preferred technical solution of the vehicle seat as described above, the backrest includes a first vertical rod and a second vertical rod opposite each other, and a cross rod between the first vertical rod and the second vertical rod, the first vertical rod being rotatably fixed to the first connecting plate, and the second vertical rod being rotatably fixed to the second connecting plate. With the above configuration, the backrest has a simple structure and is easily machined.

In a preferred technical solution of the vehicle seat as described above, a first rotating shaft is provided on the first connecting plate, and a first shaft hole that may receive the first rotating shaft is provided on a lower portion of the first vertical rod; and a second rotating shaft is provided on the second connecting plate, and a second shaft hole that may receive the second rotating shaft is provided on a lower portion of the second vertical rod, wherein a central axis of the first rotating shaft coincides with a central axis of the second rotating shaft. With the above configuration, the backrest can be easily pivotally connected to the connecting bracket.

In a preferred technical solution of the vehicle seat as described above, the vehicle seat further includes an automatic drive mechanism including: a link assembly having a fixed plate fixed to the fixed rod and a movable plate fixed to the first sliding rod; and a drive device fixed to the link assembly and configured to drive the link assembly to extend and retract in such a way that the movable plate moves in a direction away from or close to the fixed plate. The provision of the automatic drive mechanism enable easy control of the sliding movement of the cushion relative to the mounting bracket, improves the level of automation and improves the user's usage experience.

In a preferred technical solution of the vehicle seat as described above, the link assembly includes: a first connecting plate and a second connecting plate, the first connecting plate and the second connecting plate being arranged spaced apart from each other between the fixed plate and the movable plate; and four link units, wherein one of the four link units is arranged between the fixed plate and the first connecting plate, between the fixed plate and the second connecting plate, between the movable plate and the first connecting plate, and between the movable plate and the second connecting plate, respectively, and the drive device is arranged between the first connecting plate and the second connecting plate to drive the first connecting plate and the second connecting plate to move toward or away from each other. The first connecting plate and the second connecting plate are driven to move toward or away from each other by the drive device, such that the movable plate can be caused by the link units to move in a direction toward or away from the fixed plate, thereby achieving the purpose of driving the cushion to slide.

In order to solve the technical problem of a complicated structure of a vehicle seat with a cushion and backrest linkage adjustment function in the prior art, the invention provides a vehicle. The vehicle includes a vehicle seat according to any one of the above technical solutions. By employing the vehicle seat as described in any one of the above technical solutions, the vehicle of the invention can easily realize the linkage adjustment of the cushion and the backrest, improve the comfort of the vehicle seat, and simplify the structure of the vehicle seat, facilitate machining and manufacturing, reducing machining costs and reducing product weight.

### Brief Description of the Drawings

Preferred implementations of the invention are described below with reference to the drawings in which:
FIG 1 is a schematic diagram of the structure of an embodiment of a vehicle seat according to the invention;
FIG. 2 is a first schematic diagram of the structure of an embodiment of the vehicle seat according to the invention, with a cushion removed;
FIG. 3 is a second schematic diagram of the structure of an embodiment of the vehicle seat according to the invention, with the cushion removed.

### List of reference signs:

1. Vehicle seat; 10. Mounting bracket; 10a. Front end; 10b. Rear end; 11a. First side plate; 11b. Second side plate; 111. Side plate body; 112. First sliding slot; 113. Second sliding slot; 12. Fixed rod; 20. Cushion; 21. Cushion body; 22. First sliding rod; 23. Second sliding rod; 30. Connecting bracket; 31. First connecting plate; 311. First connecting plate body; 312. First rotating shaft; 32. Second connecting plate; 321. Second connecting plate body; 322. Second rotating shaft; 33. Connecting rod; 331. Connecting rod body; 332. First connecting end; 333. Second connecting end; 40. Backrest; 41. First vertical rod; 411. First vertical rod body; 412. First shaft hole; 413. Third rotating shaft; 42. Second vertical rod; 421. Second vertical rod body; 422. Second shaft hole; 423. Fourth rotating shaft; 43. Cross rod; 50. Support bracket; 51a. First support bracket; 51b. Second support bracket; 511. Support bracket body; 512. Fixed end; 513. Movable end; 60. Automatic drive mechanism; 61. Link assembly; 611. Fixed plate; 612. Movable plate; 613. First driving plate; 614. Second driving plate; 615. Link unit; 62. Drive device; 621. Drive motor; 622. Screw rod; 623. Sleeve; 624. Connector; 2. Vehicle body.

### Detailed Description of Embodiments

Preferred implementations of the invention will be described below with reference to the accompanying drawings. Those skilled in the art should understand that these implementations are only used to explain the technical principles of the invention, and are not intended to limit the scope of protection of the invention.

It should be noted that, in the description of the invention, the terms that indicate the direction or positional relationship, such as "upper", "lower", "left", "right", "inner", and "outer", are based on the direction or positional relationship shown in the figures, which is merely for ease of description instead of indicating or implying that the apparatus or element must have a particular orientation and be constructed and operated in a particular orientation, and therefore, should not be construed as limiting the invention. In addition, the terms "first" and "second" are used for descriptive purposes only, and cannot be construed as indicating or implying relative importance.

In addition, it should also be noted that, in the description of the invention, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the invention can be interpreted according to a specific situation.

In order to solve the technical problem of a complicated structure of a vehicle seat with a cushion and backrest linkage adjustment function in the prior art, the invention provides a vehicle seat 1. The vehicle seat 1 includes: a mounting bracket 10; a cushion 20 slidably fixed to the mounting bracket 10; a connecting bracket 30 fixedly connected to the cushion 20; a backrest 40, a lower portion of the backrest 40 being rotatably fixed to the connecting bracket 30; and a support bracket 50 having a movable end 513 rotatably fixed to the backrest 40 and a fixed end 512 adapted to be fixed to a vehicle body 2 of a vehicle, the connecting bracket 30 causing the backrest 40 to slide together when the cushion 20 slides relative to the mounting bracket 10, and at the same time, the backrest 40 being rotated relative to the connecting bracket 30 under the action of the support bracket 50.

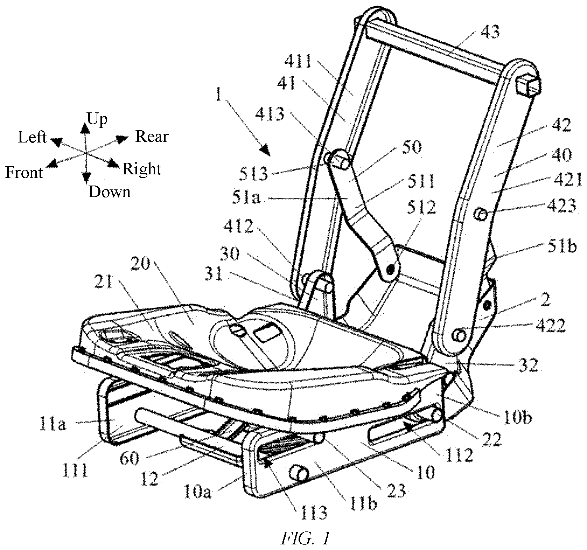

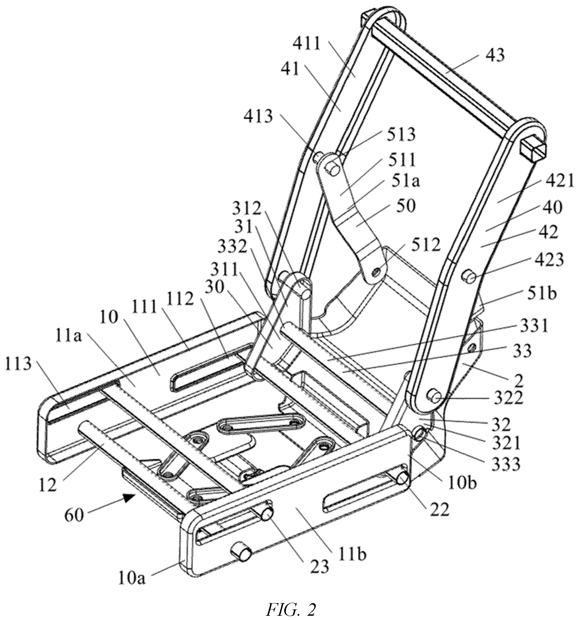

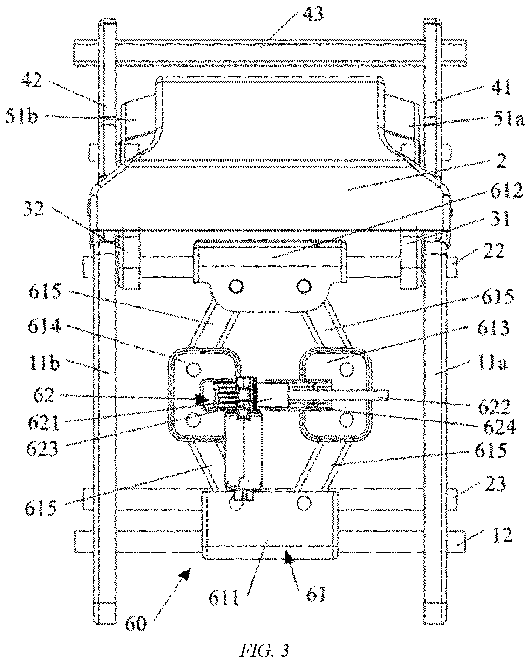

FIG 1 is a schematic diagram of the structure of an embodiment of a vehicle seat according to the invention; FIG. 2 is a first schematic diagram of the structure of an embodiment of the vehicle seat according to the invention, with a cushion removed; FIG. 3 is a second schematic diagram of the structure of an embodiment of the vehicle seat according to the invention, with the cushion removed; As shown in FIGS. 1-3, in one or more embodiments, the vehicle seat 1 of the invention includes a mounting bracket 10, a cushion 20, a connecting bracket 30, a backrest 40, a support bracket 50 and other components. Alternatively, in one or more embodiments, the vehicle seat 1 further includes an automatic drive mechanism 60. In addition, the vehicle seat 1 may further include, but is not limited to, components such as a headrest, an armrest (not shown), etc. to further enhance the comfort of the vehicle seat 1. The vehicle seat 1 may be a leather seat, a flannelet seat or another suitable seat.

As shown in FIGS. 1 and 2, the mounting bracket 10 has a front end 10a and a rear end 10b that are opposite each other. Based on the orientation as shown in FIG. 1, the front end 10a is the end remote from the page, and the rear end 10b is the end close to the page. In one or more embodiment, the mounting bracket 10 includes a first side plate 11a and a second side plate 11b opposite each other, and a fixed rod 12 arranged between the first side plate 11a and the second side plate 11b. The first side plate 11a, the second side plate 11b and the fixed rod 12 may be machined from a suitable metal material (such as stainless steel, magnesium aluminum alloy, etc.), to impart them a good mechanical strength. Based on the orientation as shown in FIG. 1, each of the first side plate 11a and the second side plate 11b extends generally in a front-rear direction. The fixed rod 12 extends generally in a left-right direction and is positioned on the first side plate 11a and the second side plate 11b adjacent to the front end 10a such that the entire mounting bracket 10 is formed in a generally U-shape. A fixing method includes, but is not limited to, welding, threaded connection, etc. The fixed rod 12 may be a solid rod to increase its own strength, or a hollow tube to reduce its own weight and reduce machining costs. With the above configuration, the mounting bracket 10 has a simple and organized structure and is easily machined.

With continued reference to FIGS. 1 and 2, each of the first side plate 11a and the second side plate 11b has a side plate body 111 extending generally in a vertical direction. In one or more embodiments, a flanged structure (not marked in the figure) that extends perpendicularly outwards is provided on a circumferential edge of the side plate body 111 to enhance the rigidity and strength of the side plate body 111. A first sliding slot 112 and a second sliding slot 113 that are spaced from each other in the front-rear direction are provided in each of the first side plate 11a and the second side plate 11b. That is, two sliding slots are provided in each of the first side plate 11a and the second side plate 11b. The first sliding slot 112 is located adjacent to the rear end 10b, and the second sliding slot 113 is located adjacent to the front end 10a. The first sliding slot 112 and the second sliding slot 113 each extend generally in the front-rear direction. The first sliding slots 112 of the first side plate 11a and the second side plate 11b are aligned with each other. The second sliding slots 113 of the first side plate 11a and the second side plate 11b are also aligned with each other. Therefore, the first sliding slots 112 may receive two opposite ends of a first sliding rod 22 fixed to the cushion 20, respectively, and the second sliding slots 113 may receive two opposite ends of a second sliding rod 23 fixed to the cushion 20, such that the cushion 20 may easily slide relative to the mounting bracket 10 in the front-rear direction. Alternatively, the number of sliding slots arranged in each of the first side plate 11a and the second side plate 11b may be set to be another suitable number greater than or less than 2, such as 1, 3, etc.

As shown in FIG. 1, the cushion 20 is configured to be slidably fixed to the mounting bracket 10. In one or more embodiments, the cushion 20 has a generally rectangular cushion body 21. The cushion body 21 may be machined from a suitable metal material (such as stainless steel, magnesium aluminum alloy, etc.), to impart the cushion body a good mechanical strength. The first sliding rod 22 and the second sliding rod 23 spaced from each other in the front-rear direction are fixed below the cushion body 21. The first sliding rod 22 and second sliding rod 23 may be of solid rod-like structures or hollow tubular structures. A fixing method includes, but is not limited to, welding, engaging, etc. In an assembled state, the first sliding rod 22 and second sliding rod 23 each extend generally in the left-right direction. Left and right ends of the first sliding rod 22 are inserted into the first sliding slot 112 of the first side plate 11a and the first sliding slot 112 of the second side plate 11b, respectively. Accordingly, left and right ends of the second sliding rod 23 are inserted into the second sliding slot 113 of the first side plate 11a and the second sliding slot 113 of the second side plate 11b, respectively, such that the cushion 20 can be easily slide on the mounting bracket 10. Alternatively, the number of sliding rods may be set to be 1, 3, or another suitable number.

As shown in FIGS. 1 and 2, the connecting bracket 30 is fixedly connected to the cushion 20 and pivotally connected to the backrest 40. The connecting bracket 30 may be machined from a suitable metal material (such as stainless steel, magnesium aluminum alloy, etc.), to impart the connecting bracket a good mechanical strength. In one or more embodiments, the connecting bracket 30 is fixed to the first sliding rod 22 adjacent to the backrest 40 to fit with the backrest 40. Alternatively, the connecting bracket 30 may be fixed to another suitable position on the cushion 20, such as to a rear portion of the cushion body 21. With the above configuration, when the cushion 20 slides relative to the mounting bracket 10, the connecting bracket 30 fixed to the cushion 20 causes the backrest 40 to slide together, which in turn simultaneously control the rotation of the backrest 40 under the action of the support bracket 50.

With continued reference to FIG. 2, in one or more embodiments, the connecting bracket 30 includes a first connecting plate 31 and a second connecting plate 32 that are apposite each other. Based on the orientation as shown in Fig. 2, the first connecting plate 31 is fixed at the left end of the first sliding rod 22, and the second connecting plate 32 is fixed at the right end of the first sliding rod 22. A fixing method includes, but is not limited to, welding, engaging, etc. The first connecting plate 31 has a first connecting plate body 311 that extends generally in the vertical direction. In one or more embodiments, a flanged structure (not marked in the figure) that extends perpendicularly outwards is formed on a circumferential edge of the first connecting plate body 311 to enhance the rigidity and strength of the first connecting plate body 311. A first rotating shaft 312 is provided on the first connecting plate body 311 to fit with a corresponding first shaft hole 412 in the backrest 40. Accordingly, the second connecting plate 32 has a second connecting plate body 321 that extends generally in the vertical direction. In one or more embodiments, a flanged structure (not marked in the figure) that extends perpendicularly outwards is formed on a circumferential edge of the second connecting plate body 321 to enhance the rigidity and strength of the second connecting plate body 321. A second rotating shaft 322 is provided on the second connecting plate body 321 to fit with a corresponding second shaft hole 422 in the backrest 40. A central axis of the second rotating shaft 322 coincides with a central axis of the first rotating shaft 312, such that the backrest 40 can be easily pivotally connected the connecting bracket 30.

With continued reference to FIG. 2, in one or more embodiments, the connecting bracket 30 further includes a connecting rod 33. The connecting rod 33 has a connecting rod body 331 extending generally in the left and right direction. The connecting rod body 331 may be of a solid rod-like structure or a hollow tubular structure. The connecting rod body 331 has a first connecting end 332 fixed to the first connecting plate 31 and a second connecting end 333 fixed to the second connecting plate 32. A fixing method may be, but is not limited to, welding, engaging, etc. The provision of the connecting rod 33 may enhance the reliability of the connection between the first connecting plate 31 and the second connecting plate 32, thereby improving the stability of the structure.

As shown in FIGS. 1 and 2, the backrest 40 is pivotally connected to the connecting bracket 30. The backrest 40 may be machined from a suitable metal material (such as stainless steel, magnesium aluminum alloy, etc.), to impart the connecting bracket a good mechanical strength. In one or more embodiment, the backrest 40 includes a first vertical rod 41 and a second vertical rod 42 opposite each other, and a cross rod 43 arranged between the first vertical rod 41 and the second vertical rod 42. Particularly, the first vertical rod 41 and the second vertical rod 42 are parallel to each other and extend obliquely backwards and upwards from the connecting bracket 30. The cross rod 43 extends generally in the left-right direction and is positioned above the first vertical rod 41 and the second vertical rod 42. With the above configuration, the entire backrest 40 is generally U-shaped, has a simple and organized structure and is easily machined.

With continued reference to FIGS. 1 and 2, the first vertical rod 41 has a first vertical rod body 411 extending generally in the vertical direction. In one or more embodiments, a flanged structure (not marked in the figure) that extends perpendicularly outwards is formed on a circumferential edge of the first vertical rod body 411 to enhance the rigidity and strength of the first vertical rod body 411. The first shaft hole 412 is provided in a lower portion of the first vertical rod body 411 to fit with the corresponding first rotating shaft 312 on the connecting bracket 30. A third rotating shaft 413 is provided in the middle of the first vertical rod body 411 to fit with the corresponding movable end 513 of the support bracket 50. Accordingly, the second vertical rod 42 has a second vertical rod body 421 extending generally in the vertical direction. In one or more embodiments, a flanged structure (not marked in the figure) that extends perpendicularly outwards is formed on a circumferential edge of the second vertical rod body 421 to enhance the rigidity and strength of the second vertical rod body 421. The second shaft hole 422 is provided in a lower portion of the second vertical rod body 421 to fit with the corresponding second rotating shaft 322 on the connecting bracket 30. A fourth rotating shaft 423 is provided in the middle of the second vertical rod body 421 to fit with the corresponding movable end 513 of the support bracket 50. A central axis of the fourth rotating shaft 423 coincides with a central axis of the third rotating shaft 413, such that the support bracket 50 is pivotally connected to the backrest 40.

With continued reference to FIGS. 1 and 2, in one or more embodiments, the cross rod 43 is of a hollow tubular structure. The tubular structure has a generally square longitudinal section. Alternatively, the tubular structure may also be configured to have a circular longitudinal section or another suitable longitudinal section. Alternatively, the cross rod 43 may be configured as a solid rod-like structure.

As shown in FIGS. 1 and 2, in one or more embodiments, the support bracket 50 includes a first support bracket 51a and a second support bracket 51b that are opposite each other. The first support bracket 51a and the second support bracket 51b may be machined from a suitable metal material (such as stainless steel, magnesium aluminum alloy, etc.), to impart the them a good mechanical strength. Alternatively, the support bracket 50 may be configured to include only the first support bracket 51a or only the second support bracket 51b. Each of the first support bracket 51a and the second support bracket 51b includes a support bracket body 511 extending generally in the vertical direction. The support bracket body 511 has a fixed end 512 and a movable end 513 opposite to each other. The fixed end 512 is configured such that the fixed end may be fixedly connected to the vehicle body 2 of the vehicle, and the movable end 513 is rotatably fixed to the corresponding third rotating shaft 413 or fourth rotating shaft 423 on the backrest 40. The vehicle body 2 may be, but is not limited to, a bottom sheet metal part of a vehicle.

As shown in FIG. 3, in one or more embodiments, the automatic drive mechanism 60 includes a link assembly 61 in combination with a drive device 62. The link assembly 61 includes a fixed plate 611 fixed to the fixed rod 12 and a movable plate 612 fixed to the first sliding rod 22. The fixed plate 611 and the movable plate 612 may be machined from a suitable metal material (such as stainless steel, magnesium aluminum alloy, etc.), to impart them a good mechanical strength. A fixing method includes, but is not limited to, engaging, welding, etc. The drive device 62 is arranged on the link assembly 61 and may drive the link assembly 61 to extend and retract to control the movement of the movable plate 612 in a direction away from the fixed plate 611 or close to the fixed plate 611. In turn, the first sliding rod 22 fixedly connected to the movable plate 612 is automatically controlled to slide within the first sliding slot 112.

With continued reference to FIG. 3, the link assembly 61 further includes a first driving plate 613 and a second driving plate 614 arranged between the fixed plate 611 and the movable plate 612 and spaced from each other in the left-right direction and four link units 615. The first driving plate 613, the second driving plate 614 and the link units 615 may be machined from a suitable metal material (such as stainless steel, magnesium aluminum alloy, etc.), to impart them a good mechanical strength. The first driving plate 613, the second driving plate 614 has a generally rectangular shape. One of the four link units 615 is arranged between the fixed plate 611 and the first driving plate 613, between the fixed plate 611 and the second driving plate 614, between the movable plate 612 and the first driving plate 613, and between the movable plate 612 and the second driving plate 614, respectively. The junctions between the four link units 615 and each of the fixed plate 611, the movable plate 612, the first driving plate 613 and the second driving plate 614 are approximately located at the eight vertices of a regular octagon.

With continued reference to FIG. 3, the drive device 62 is arranged between the first driving plate 613 and the second driving plate 614 so as to drive the first driving plate 613 and the second driving plate 614 to move toward or away from each other. In one or more embodiments, the drive device 62 includes a drive motor 621, a screw rod 622, a sleeve 623, a connector 624 and other components. The drive motor 621 is fixed to the second driving plate 614. The drive motor 621 may be, but is not limited to, a stepping motor, a servo motor, or the like. The drive motor 621 is configured to form a communication connection with a control system of a vehicle such that a user may control the switch-on and switch-off of the drive motor 621 according to actual needs. A drive shaft of the drive motor 621 is connected to the screw rod 622 and extends generally in the left-right direction. An external thread (not marked in the figure) is provided on an outer circumferential wall of the screw rod 622, and an internal thread (not marked in the figure) matching with the external thread is formed on an inner circumferential wall of the sleeve 623. The sleeve 623 is fixedly connected the connector 624 fixed to the first driving plate 613.

In the following, based on the above-described specific structure of the vehicle seat 1, the operating principles of the linkage adjustment of the cushion 20 and the backrest 40 will be introduced.

When the screw rod 622 is rotated in the forward direction by the drive motor 621, the sleeve 623 sleeved on the screw rod 622 moves in a direction away from the drive motor 621, thereby moving the first driving plate 613 and the second driving plate 614 away from each other. During the process, the movable plate 612 extend close to the fixed plate 611 (i.e., the link assembly 61 contracts) under the drive of the link units 615, such that the first sliding rod 22 connected to the movable plate 612 slides forward within the first sliding slot 112. The second sliding rod 23 is caused to also slide forward in the corresponding second sliding slot 113. That is, the entire cushion 20 slides forward relative to the mounting bracket 10. At the same time, the connecting bracket 30 fixed to the first sliding rod 22 will cause the backrest 40 to slide forward together. Since the fixed end 512 of the support bracket 50 is connected to the vehicle body 2, when the backrest 40 is caused to slide forward by the connecting bracket 30, the support bracket 50 will rotate counterclockwise about the fixed end 512, such that the entire backrest 40 rotates clockwise simultaneously about the central axis of the first rotating shaft 312 and the second rotating shaft 322 under the action of the links. That is, the backrest 40 is turned backward relative to the connecting bracket 30.

Accordingly, when the screw rod 622 is driven to rotate in a reverse direction by the drive motor 621, the entire cushion 20 slides rearward relative to the mounting bracket 10, and the backrest 40 is turned forward relative to the connecting bracket 30. Thus, the linkage adjustment of the cushion 20 and the backrest 40 is easily made.

In one or more embodiments, the invention further provides a vehicle (not marked in the figures). The vehicle includes a vehicle seat 1 according to any one of the above embodiments. The vehicle includes, but is not limited to, wheels, a steering wheel, a power system and other components. The vehicle may be fuel vehicle, an electric vehicle, a hybrid vehicle, or the like. The vehicle may be a car, an SUV, an MPV or another suitable vehicle.

Heretofore, the technical solutions of the invention have been described with reference to the preferred implementations shown in the accompanying drawings. However, those skilled in the art can readily understand that the scope of protection of the invention is apparently not limited to these specific implementations. Those skilled in the art may make equivalent changes or substitutions to the related technical features without departing from the principle of the invention, and all the technical solutions with such changes or substitutions shall fall within the scope of protection of the invention.

## Claims

1. A vehicle seat, comprising:
a mounting bracket;
a cushion slidably fixed to the mounting bracket;
a connecting bracket fixedly connected to the cushion;
a backrest, a lower portion of the backrest being rotatably fixed to the connecting bracket; and
a support bracket, wherein the support bracket has a movable end rotatably fixed to the backrest and a fixed end adapted to be fixed to a vehicle body of a vehicle, and
when the cushion slides relative to the mounting bracket, the connecting bracket causes the backrest to slide together while the backrest rotates relative to the connecting bracket under the action of the support bracket.

2. The vehicle seat according to claim 1, wherein
a first sliding slot that is adjacent to the backrest and a second sliding slot that is remote from the backrest are provided in the mounting bracket;
a first sliding rod slidable in the first sliding slot and a second sliding rod slidable in the second sliding slot are provided on the cushion, and
the connecting bracket is fixed to the first sliding rod.

3. The vehicle seat according to claim 2, wherein the mounting bracket comprises:
a first side plate and a second side plate, the first side plate and the second side plate being arranged opposite each other, and the first sliding slot and the second sliding slot being provided in each of the first and second side plates; and
a fixed rod arranged between the first side plate and second side plate and positioned away from the backrest.

4. The vehicle seat according to claim 2 or 3, wherein the connecting bracket comprises a first connecting plate and a second connecting plate opposite each other and fixed at two ends of the first sliding rod, respectively, the first connecting plate and the second connecting plate each being connected to the backrest.

5. The vehicle seat according to claim 4, wherein the connecting bracket further comprises a connecting rod, the connecting rod having a first connecting end fixed to the first connecting plate and a second connecting end fixed to the second connecting plate.

6. The vehicle seat according to claim 4, wherein the backrest comprises a first vertical rod and a second vertical rod opposite each other, and a cross rod between the first vertical rod and the second vertical rod, the first vertical rod being rotatably fixed to the first connecting plate, and the second vertical rod being rotatably fixed to the second connecting plate.

7. The vehicle seat according to claim 6, wherein
a first rotating shaft is provided on the first connecting plate, and a first shaft hole that is capable of receiving the first rotating shaft is provided on a lower portion of the first vertical rod; and
a second rotating shaft is provided on the second connecting plate, and a second shaft hole that is capable of receiving the second rotating shaft is provided on a lower portion of the second vertical rod;
wherein a central axis of the first rotating shaft coincides with a central axis of the second rotating shaft.

8. The vehicle seat according to claim 3, further comprising an automatic drive mechanism comprising:
a link assembly having a fixed plate fixed to the fixed rod and a movable plate fixed to the first sliding rod; and
a drive device fixed to the link assembly and configured to drive the link assembly to extend and retract in such a way that the movable plate moves in a direction away from or close to the fixed plate.

9. The vehicle seat according to claim 8, wherein the link assembly comprises
a first driving plate and a second driving plate, the first driving plate and the second driving plate being arranged spaced apart from each other between the fixed plate and the movable plate; and
four link units, wherein one of the four link units being arranged between the fixed plate and the first driving plate, between the fixed plate and the second driving plate, between the movable plate and the first driving plate, and between the movable plate and the second driving plate, respectively, and
the drive device is arranged between the first driving plate and the second driving plate to drive the first driving plate and the second driving plate to move toward or away from each other.

10. A vehicle, comprising a vehicle seat according to any one of claims 1 to 9.
